# EUROPÄISCHE PATENTSCHRIFT

(11) **EP 0 861 388 B1**
(45) Veröffentlichungstag und Bekanntmachung des Hinweises auf die Patenterteilung: **15.09.1999**
(21) Anmeldenummer: 96946016.1
(22) Anmeldetag: 26.11.1996
(51) Int. Cl.: F16H 25/20

(54) **SPINDELANTRIEB**
SPINDLE DRIVE
ENTRAINEMENT D'ARBRE

(30) Priorität: 30.11.1995 DE 19544575
(43) Veröffentlichungstag der Anmeldung: 02.09.1998
(73) Patentinhaber: Heidelberger Druckmaschinen Aktiengesellschaft, 69115 Heidelberg (DE)
(72) Erfinder: MELZER, Peter, D-24146 Kiel (DE)
(86) Internationale Anmeldenummer: DE9602267
(87) Internationale Veröffentlichungsnummer: WO9720154

(56) Entgegenhaltungen:
- CH-A- 344 877
- US-A- 2 493 000
- US-A- 5 303 606

## Beschreibung

Die Erfindung betrifft einen Spindelantrieb mit einer Spindel und einer darauf ablaufenden Spindelmutter zum hochgenauen Antrieb einer linear beweglichen Vorrichtung.

Spindelantriebe finden beispielsweise in der elektronischen Reproduktionstechnik bei elektronischen Aufzeichnungsgeräten zur punkt- und zeilenweisen Belichtung von Aufzeichnungsmaterialien, auch Ausgabe-Scanner, Belichter oder Recorder genannt, Anwendung.

Bei einem elektronischen Aufzeichnungsgerät vom Flachbett-Typ ist das zu belichtende Aufzeichnungsmaterial auf einem linear beweglichen Tisch oder Wagen aufgespannt, und das Aufzeichnungsorgan ist stationär angeordnet. Bei einem Aufzeichnungsgerät vom Innentrommel-Typ befindet sich Aufzeichnungsmaterial in einer stationären, zylindersegmentartigen Halterung, und das Aufzeichnungsorgan ist auf einem linear beweglichen Tisch oder Wagen montiert. Tisch oder Wagen sind mechanisch starr mit einer Spindelmutter verbunden, mit der die Drehbewegung einer durch einen Motor angetriebenen Spindel in eine Linearbewegung des Tisches oder Wagens umgesetzt wird.

Um eine gute Aufzeichnungsqualität insbesondere bei der gerasterten Belichtung von Aufzeichnungsmaterialien zu erzielen, ist unter anderem eine gleichförmige Lineargeschwindgkeit des Tische bzw. Wagens erforderlich, die im wesentlichen von der Qualität des Spindelantriebes abhängig ist. Bei Aufzeichungsgeräten, die im Start/Stop-Betrieb arbeiten, muß der Spindelantrieb darüber hinaus eine hohe Genauigkeit bei der Positionierung des Tisches oder Wagens entlang der Spindel ermöglichen. Dabei soll die Gleichlauf- und Positioniergenauigkeit in beiden Richtungen der Linearbewegung gewährleistet sein.

Aus der gattungsgemäßen CH-A-344 877 ist bereits eine zweiteilige Spindelmutter für eine Spindel bekannt. Die Spindelmutter besteht aus zwei Gleitmutter-Segmenten, die durch einen Führungskörper in radialer Richtung zur Spindel beweglich und verkippsicher geführt werden. Beide Gleitmutter-Segmente werden federnd an die Spindel angedrückt.

Mit der bekannten zweiteiligen Spindelmutter kann nicht in allen Fällen eine gleichförmigen Linearbewegung und eine hohe Positioniergenauigkeit sichergestellt werden. Es besteht der Zielkonflikt zwischen einer möglichst eng an der Spindel anliegenden Spindelmutter, die aber in nachteiliger Weise zum Klemmen an der Spindel neigt, und einer leicht beweglichen Spindelmutter mit einer Lose, die in nachteiliger Weise die Gleichförmigkeit der Linearbewegung und die Positioniergenauigkeit beeinträchtigt.

Aus der US-A-2 493 000 ist es bekannt, das axiale Flankenspiel zwischen Gleitmutter-Segmenten und einer Spindel durch eine Feder zu beseitigen. Die Beseitigung des Flankenspiels erfolgt aber nicht in Abhängigkeit von der wählbaren Richtung einer Linearbewegung eines von der Spindel angetriebenen Elements.

Aufgabe der vorliegenden Erfindung ist es daher, einen herkömmlichen Spindelantrieb derart zu verbessern, daß in beiden Bewegungsrichtungen einer durch durch den Spindelantreib angetriebenen Vorrichtung eine hohe Gleichförmigkeit der Linearbewegung und eine hohe Positioniergenauigkeit entlang der Spindel erreicht wird.

Diese Aufgabe wird durch die Merkmale des Anspruchs 1 gelöst. Vorteilhafte Weiterbildungen und Ausgestaltungen sind in den Unteransprüchen angegeben.

Die Erfindung wird nachfolgend anhand der Fig. 1 bis 5 näher erläutert.

Es zeigen:
- Fig. 1: ein prinzipielles Anwendungsbeispiel für einen Spindelantrieb mit einer Spindel und einer Spindelmutter,
- Fig. 2: eine Draufsicht auf eine Stirnseite der Spindelmutter in Axialrichtung der Spindel,
- Fig. 3: eine Seitenansicht der Spindelmutter,
- Fig. 4: die beiden Schaltstellungen einer Verstellvorrichtung und
- Fig. 5: vereinfachte, ausschnittsweise Schnittbilder durch die Gleitmutter-Segmente und durch die Spindel.

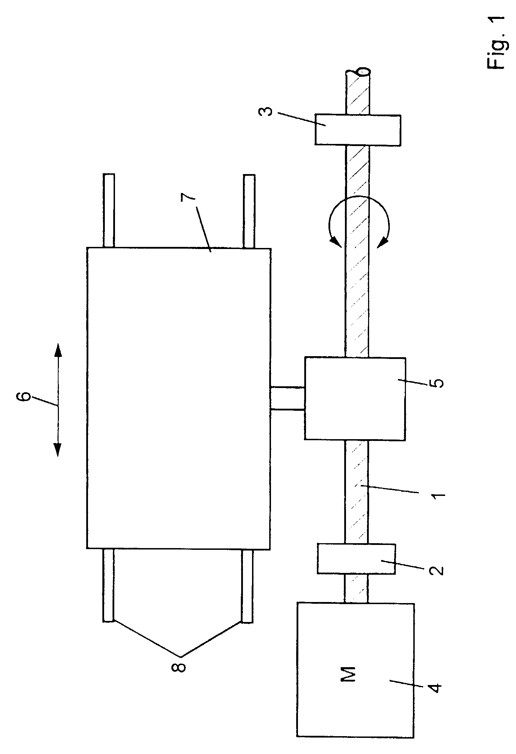

Fig. 1 zeigt ein prinzipilles Anwendungsbeispiel für einen Spindelantrieb. Eine Spindel (1) ist mittels Spindellager (2, 3) drehbar gelagert und wird von einem Motor (4) angetrieben. Die Drehbewegung der Spindel (1) wird durch eine Spindelmutter (5) auf der Spindel (1) in eine Linearbewegung (6) umgesetzt, deren Richtung von der Drehrichtung der Spindel (1) abhängig ist. Die Spindelmutter (5) ist starr mit einem Tisch (7) verbunden, der durch zwei Längsführungen (8) geführt wird. Für den Fall, daß der Spindelantrieb bei einem elektronischen Aufzeichnungsgerät (Belichter, Recorder) vom Flachbett-Typ Anwendung findet, ist auf dem Tisch (7) ein zu belichtendes Aufzeichnungsmaterial montiert, das von einem stationären Aufzeichnungsorgan punkt- und zeilenweise belichtet wird. Bei einem Aufzeichnungsgerät vom Innentrommel-Typ, bei dem sich das zu belichtende Aufzeichnungsmaterial in einer stationären, zylindersegmentartigen Halterung befindet, ist das Aufzeichnungsorgan auf dem Tisch (7) montiert. Der erfindungsgemäße Spindelantrieb wird nachfolgend näher beschrieben.

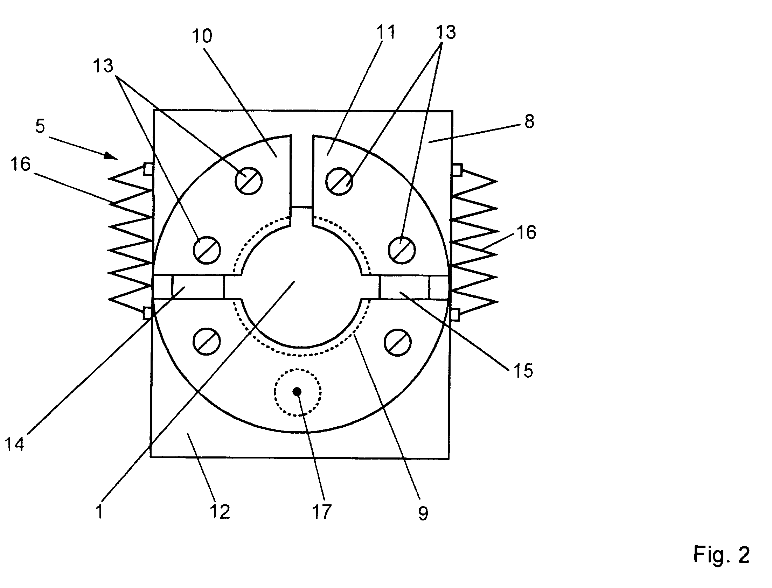

Fig. 2 zeigt eine Draufsicht auf eine Stirnseite der Spindelmutter (5) in Axialrichtung der Spindel (1). Die Spindelmutter (5) besteht prinzipiell aus einem die Spindel (1) umgebenden Grundblock (8) mit einer Bohrung (9) für die Spindel (1), mindestens zwei oberhalb der Spindel (1) angeordneten oberen Gleitmutter-Segmenten (10, 11) und mindestens einem unterhalb der Spindel (1) angeordneten unteren Gleitmutter-Segment (12).

Die Innenflächen der hohlzylindersegmentförmigen Gleitmutter-Segmente (10, 11, 12) sind als Gewinde ausgebildet, die in das Gewinde der Spindel (1) eingreifen. Das Profil des Gewindes der Gleitmutter-Segmente (10, 11, 12) entspricht annähernd dem Profil des Gewindes der jeweils verwendeten Spindel (1). Jedoch sind Breite und Tiefe des Gewindes der Gleitmutter-Segmente (10, 11, 12) kleiner als die entsprechende Breite und Tiefe des Gewindes der verwendeten Spindel (1). Durch die unterschiedlichen Breiten des Mutter-Gewindes und des Spindel-Gewindes entsteht eine gewollte Axiallose zwischen Gleitmuttersegmenten (10, 11, 12) und Spindel (1), wodurch sich die Spindelmutter (5) und damit auch die angekoppelten Elemente leicht entlang der Spindel (1) hin- und herbewegen lassen.

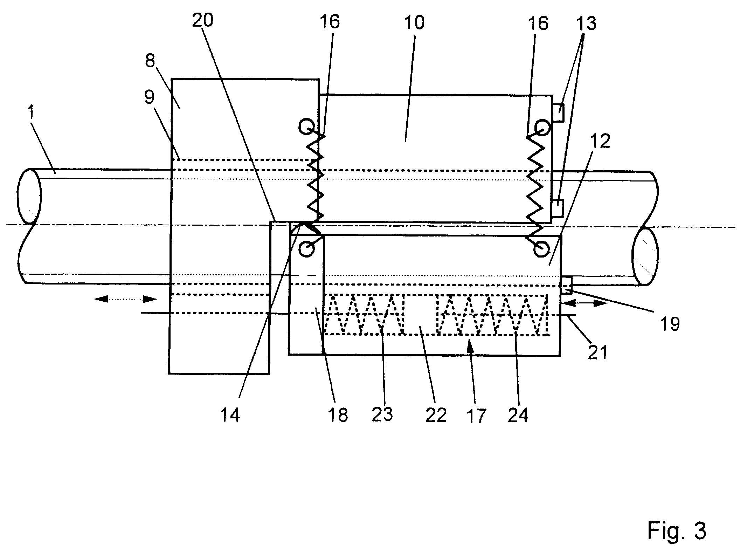

Im dargestellten Ausführungsbeispiel sind zwei im Querschnitt viertelkreisförmige, obere Gleitmuttersegmente (10, 11) und ein im Querschnitt halbkreisförmiges, unteres Gleitmutter-Segment (12) vorgesehen. Die Gleitmutter-Segmente (10, 11, 12) weisen, wie in Fig. 3 erkennbar, ihre Durchmesser übersteigende Axiallängen auf. Die Gleitmutter-Segmente (10, 11, 12) werden in vorteilhafter Weise aus einer hohlzylinderförmigen Gleitmutter gefertigt, welche die verwendete Spindel (1) mit einer Radiallose umschließt. Die oberen Gleitmutter-Segmente (10, 11) sind an dem Grundblock (8) im wesentlichen in Radialrichtung zur Spindel (1) justierbar angeordnet und mittels Schrauben (13) an dem Grundblock (8) fixierbar. Zur Justierung der oberen Gleitmutter-Segmente (10, 11) wird die montierte Spindelmutter (5) in zweckmäßiger Weise in einen nicht durchhängenden Bereich der Spindel (1), also in der Nähe eines Spindellagers (2, 3) positioniert. In dieser Position werden die oberen Gleitmutter-Segmente (10, 11) manuell an die Spindel (1) gedrückt und dann mittels der Schrauben (13) an dem Grundblock (8) fixiert, wodurch die Radiallose der oberen Gleitmutter-Segmente (10, 11) bezüglich der Spindel (1) minimiert wird.

Das untere Gleitmuttersegment (12) weist, wie in Fig. 3 näher erkennbar, in dem dem Grundblock (8) zugewandten Bereich mindestens zwei Gleitfüße (14, 15) auf, die sich an dem Grundblock (8) abstützen und in dem dem Grundblock (8) zugewandten Bereich der Gleitmuttter-Segmente (10, 11, 12) für einen definierten Abstand zwischen den oberen Gleitmutter-Segmenten (10, 11) und dem unteren Gleitmutter-Segment (12) sorgen.

Die Spindelmutter (5) weist außerdem Zugfedern (16) auf. Die Zugfedern (16) bewirken eine Zugkraft zwischen der aus dem Grundblock (8) und den oberen Gleitmutter-Segmenten (9, 10) gebildeten starren Einheit und dem unteren Gleitmutter-Segment (12). Mittels der Zugfedern (16) wird die elastische, zwischen den Spindellagern durchhängende Spindel (1) im Bereich der Spindelmutter (5) von dem unteren Gleitmutter-Segment (12) angehoben und mit einer definierten Kraft an die oberen Gleitmutter-Segmente (10, 11) angedrückt, wodurch für eine genaue Führung der Spindel (1) gesorgt wird.

Durch die federnde Anlage der Gleitmutter-Segmente (10, 11, 12) an die Spindel (1) wird außerdem erreicht, daß ein nicht zu verhinderndes Einschleifen der Spindel (1) in das Material der Gleitmutter-Segmente (10, 11, 12) nicht zu unregelmäßigen und unkontrollierbaren Differenzbewegungen der Gewindeflanken des Spindel-Gewindes gegenüber den Spindelflanken des Mutter-Gewindes führt.

Die Spindelmutter (5) weist außerdem eine unter der Spindel (1) angeordnete Verstellvorrichtung (17) auf, deren Aufbau und Wirkungsweise später erläutert wird.

Der Grundblock (8) stellt ein starres Verbindungsglied zwischen dem zu bewegenden Teil, beispielsweise dem Tisch (7) nach Fig. 1, und den oberen Gleitmutter-Segmenten (10, 11) bzw. der Spindel (1) selbst dar.

Der Grundblock (8) kann in einer zur Zeichenebene senkrechten Ebene in gewissen Grenzen durch Verschieben und Drehen relativ zu dem zu bewegneden Teil justiert werden, wodurch die oberen Gleitmutter-Segmente (10, 11) in der Ebene in dem richtigen Winkel zur Spindel (1) eingestellt werden können.

Fig. 3 zeigt eine Seitenansicht der Spindelmutter (5). Die Gleiffüße (14, 15), die beispielsweise halbkugelförmig ausgebildet sind, befinden sich auf der Außenfläche eines im Querschnitt halbkreisförmigen Abschlußdeckels (18), der an der dem Grundblock (8) zugewandten Stirnfläche des unteren Gleitmutter-Segmentes (12) angebracht ist. Bei der Montage wird der Abschlußdeckel (18) zunächst in Bezug auf den Grundblock (8) ausgerichtet und dann das untere Gleitmutter-Segment (12) in Ausrichtung zur Spindel (1) bzw. zu den oberen Gleitmutter-Segmenten (10, 11) mittels Schrauben (19) an den Abschlußdeckel (18) justiert angesetzt.

Die Gleiffüße (14, 15) stützen sich auf einer durch eine Aussparung in dem Grundblock (8) gebildete Auflagefläche (20) ab.

Die Zugfedern (16), im Ausführungsbeispiel vier Zugfedern, sind mit ihren einen Enden paarweise an den stirnseitigen Bereichen des unteren Gleitmutter-Segmentes (12) angebracht, während die anderen Enden der Zugfedern (16) am Grundblock (8) bzw. an den oberen Gleitmutter-Segmenten (10, 11) befestigt sind. Die Zugfedern (16) bestimmen auch die Auflagekraft der beiden Gleiffüße (14, 15) auf der Auflagefläche (20).

Durch die Gleitfüße (14, 15) in Verbindung mit den Zugfedern (16) wird ein leichte Bewegung des unteren Gleitmutter-Segmentes (12) gegenüber den oberen Gleitmutter-Segmenten (10, 11) in einer zur Zeichenebene senkrechten Ebene sichergestellt, wodurch sich das bewegliche untere Gleitmutter-Segment (12) in vorteilhafter Weise selbsttätig in die richtige Position zur Spindel (1) einstellt.

Darüber hinaus kann das untere Gleitmutter-Segment (12) eine leichte Kippbewegung um die Berührungspunkte der Gleitfüße (14, 15) mit der Auflagefläche (20) im Grundblock (8) in Richtung der Spindel (1) durchführen, wodurch ein unvermeidbares Einschleifen der Spindel (1) in das Material der Gleitmutter-Segmente (10, 11, 12) in bevorzugter Weise durch selbsttätiges Nachstellen der Gleitmutter-Segmente (10, 11, 12) ohne Qualitätsverlust ausgeglichen wird.

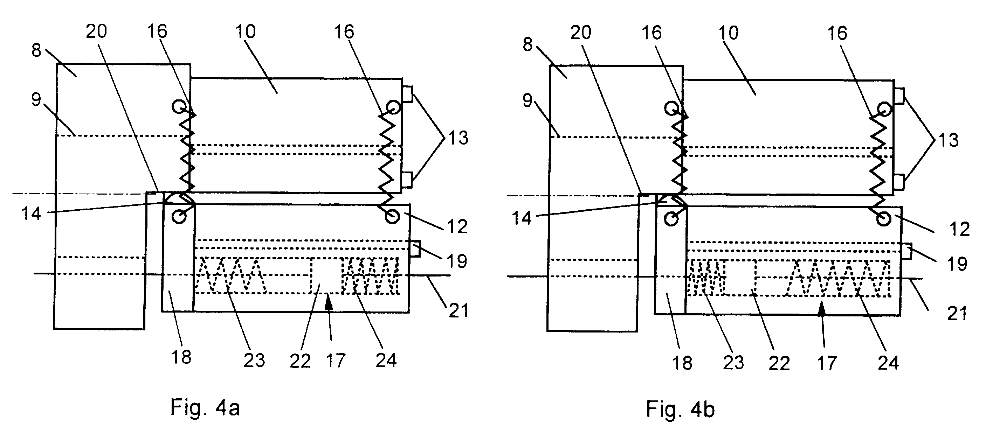

Innerhalb des unteren Gleitmutter-Segmentes (12) ist die Verstellvorrichtung (17) angebracht. Die Verstellvorrichtung (17) weist im wesentlichen eine in Axialrichtung der Spindel (1) verschiebare Schubstange (21), ein an der Schubstange (21) befestigtes Schubelement (22) und zwei die Schubstange (21) umschließende Druckfedern (23, 24) links und rechts des Schubelementes (22) auf. Die Schubstange (21) stützt sich an dem Grundblock (8) ab. Durch eine gesteuerte Axialbewegung der Schubstange (21) in zwei Stellpositionen rechts und links einer in Fig. 2 dargestellten kraftneutralen Mittelstellung wird erreicht, daß das Schubelement (22) entweder die eine oder die andere Druckfeder (23, 24) zusammendrückt, wodurch eine entsprechend gerichtete axiale Andruckkraft in das untere Gleitmutter-Segment (12) eingeleitet wird. Die beiden Stellpositionen der Verstellvorrichtung (17) sind in Fig. 4a und Fig. 4b dargestellt. Die axiale Verschiebung der Schubstange (21) in die beiden Stellpositionen kann vorzugsweise mit Hilfe eines geeigneten, elektrisch gesteuerten Verstellorgans, beispielsweise mit Hilfe eines Motors, durchgeführt werden.

In Fig. 4a und Fig. 4b sind die beiden Stellpositionen der Verstellvorrichtung (17) in dem unteren Gleitmutter-Segment (12) der Spindelmutter (5) dargestellt. In der Stellposition nach Fig. 4a wird die rechte Druckfeder (24) zusammengedrückt, wodurch eine nach rechts gerichtete axiale Andruckkraft auf das untere Gleitmutter-Segment (12) ausgeübt wird. Dagegen wird in der Stellposition nach Fig. 4b die linke Druckfeder (23) zusammengedrückt, wodurch eine nach links gerichtete axiale Andruckkraft auf das untere Gleitmutter-Segment (12) ausgeübt wird.

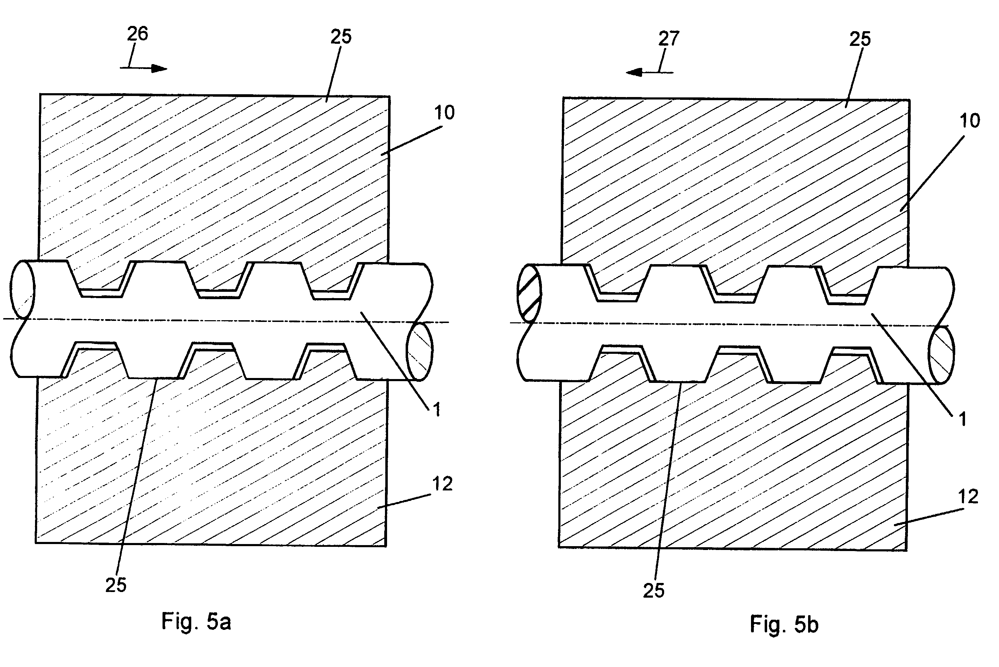

Zur Verdeutlichung der Wirkungsweise des erfindungsgemäßen Spindelantriebes zeigen Fig. 5a und Fig. 5b in vereinfachten, ausschnittsweisen Schnittbildern den Eingriff der Gewinde der Gleitmutter-Segmente (10, 11, 12) der Spindelmutter (5) in das Gewinde der Spindel (1). Es ist ersichtlich, daß das Profil des Mutter-Gewindes, im gezeigten Beispiel ein trapezförmiges Profil, annähernd dem Profil des Spindel-Gewindes entspricht und daß aufgrund der etwas geringeren Profilbreite des Muttergewindes gegenüber der Profilbreite des Spindel-Gewindes eine Axiallose zwischen dem Mutter-Gewinde und dem Spindel-Gewinde besteht. Es ist außerdem ersichtlich, daß sich die Talflächen (25) des Mutter-Gewindes jeweils auf der bearbeiteten Außen- bzw. Mantelfläche der Spindel (1) als Referenzfläche für die radiale Positionierung abstützen, wobei die Anlage der oberen Gleitmutter-Segmente (10, 11) an der Mantelfläche der Spindel (1) durch die Justierung der oberen Gleitmutter-Segmente (10, 11) und die Anlage des unteren Gleitmutter-Segmentes (12) an die Mantelfläche der Spindel (1) durch die Zugfedern (16) erreicht wird.

Durch diese Art der Führung der Gleitmutter-Segmente (10, 11, 12) an der bearbeiteten Mantelfläche der Spindel (1) ist sichergestellt, daß die Gewindeflanken der Gleitmuttern (10, 11, 12) stets in einer definierten Flankenhöhe mit den Gewindeflanken der Spindel (1) Berührung haben, wodurch die Gewindeflanken des Mutter-Gewindes und des Spindel-Gewindes stets mit konstantem Andruck aufeinander gleiten. Dadurch wird in vorteilhafter Weise eine hohe Genauigkeit bei der Umsetzung der Drehbewegung der Spindel (1) in die Linearbewegung der Spindelmutter (5) erzielt. Durch Verwendung von Präzisionsspindeln läßt sich die Genauigkeiten noch steigern, ohne daß die Fertigungsgenauigkeit für die Spindelmutter (5) erhöht werden muß. Bei der Herstellung von Präzisionsspindeln wird nämlich bereits eine hoch präzise Mantelfläche als Referenzfläche für den Schleifprozeß benötigt, die dann in bevorzugter Weise auch als Referenzfläche beim Abstützen der Gleitmutter-Segmente (10, 11, 12) verwendet werden kann.

Mittels der Verstellvorrichtung (17) läßt sich in vorteilhafter Weise eine von der gewünschten Richtung der Linearbewegung abhängige Anlage der Gewindeflanken des Mutter-Gewindes und der Gewindeflanken des Spindel-Gewindes erreichen.

Bei der in Fig. 4a gezeigten Stellposition der Verstellvorrichtung (17) sind jeweils die linken Gewindeflanken der oberen Gleitmutter-Segmente (10, 11) und der Spindel (1) im Eingriff, wodurch die oberen Gleitmutter-Segmente (10, 11), der Grundblock (1) und damit auch die an den Grundblock (1) mechanisch angekoppelten Elemente in Richtung (Nutzrichtung) eines Pfeiles (26) geschoben werden, während die rechten Gewindeflanken des unteren Gleitmutter-Segmentes (12) und der Spindel (1) federnd im Eingriff sind (Fig. 5a).

Bei der in Fig. 4b gezeigten Stellposition der Verstellvorrichtung (17) sind dagegen jeweils die rechten Gewindeflanken der oberen Gleitmutter-Segmente (10, 11) und der Spindel (1) im Eingriff, wodurch die oberen Gleitmutter-Segmente (10, 11) und die mechanisch angekoppelten Elemente in Richtung eines Pfeiles (27) geschoben werden, während die linken Gewindeflanken des unteren Gleitmutter-Segmentes (12) und der Spindel (1) federnd im Eingriff sind (Fig. 5b).

Durch die oben beschriebene richtungsabhängige Umsteuerung bei dem erfindungsgemäßen Spindelantrieb "schieben" die Gewindeflanken des Spindel-Gewindes stets ohne Axiallose die in Richtung der genutzen Linearbewegung liegenden Gewindeflanken des Gewindes der oberen Gleitmutter-Segmente (10, 11). Es entsteht eine richtungsunabhängige, starre Kopplung zwischen Spindel (1) und den über die Spindelmutter (5) starr angekoppelten Elementen ohne die Gefahr, daß geschwindigkeitabhängige, störende Eigenschwingungen auftreten.

Der die Spindel (1) antreibende Motor (4), beispielsweise ein Schrittmotor, reagiert bei Drehmomentschwankungen mit entsprechenden Lastwinkelschwankungen. Die Folge von Lastwinkelschwankungen sind Winkelgeschwindigkeitsänderungen der Spindel (1) und damit störende Änderungen der Lineargeschwindigkeit. Um eine konstante Lineargeschwindigkeit zu erzielen, muß daher das dem Motor (4) abverlangte Drehmoment möglichst konstant sein. Ein nahezu konstantes Drehmoment wird bei dem erfindungsgemäßen Spindelantrieb dadurch erreicht, daß die Gewindeflanken des Spindel-Gewindes und des Mutter-Gewindes mit einer definierten Andruckkraft miteinander im Eingriff sind und daß durch die "federnde" Lose der Spindelmutter (5) keine Drehmomentenspitzen infolge einer Klemmung zwischen Spindel (1) und Spindelmutter (5) auftreten können.

Bei Verwendung des erfindungsgemäßen Spindelantriebes beispielsweise in einem Aufzeichnungsgerät mit Start/Stop-Betrieb läßt sich somit in vorteilhafter Weise eine hohe Gleichförmigkeit der Linearbewegung des Tisches oder Wagens sowie eine hohe Positioniergenauigkeit und damit insgesamt eine gute Aufzeichnungsqualität erzielen.

## Patentansprüche

1. Spindelantrieb mit einer Spindel (1) und einer auf der Spindel (1) ablaufenden Spindelmutter (5) zum hochgenauen Antrieb einer linear beweglichen Vorrichtung (7), bei dem die Spindelmutter (5) aus folgenden Elementen besteht:
- einem mit der beweglichen Vorrichtung (7) verbundenen Grundblock (8) mit einer axial zur Spindel (1) verlaufenden Bohrung (9) zur losen Durchführung der Spindel (1),
- einem an dem Grundblock (8) angeordneten Gleitmutter-Segment (10), dessen Gewinde sich an der Spindel (1) abstützt und
- einem federnd gehalterten weiteren Gleitmutter-Segment (12), dessen Gewinde sich federnd an der Spindel (1) abstützt, **dadurch gekennzeichnet,** daß
- das Gleitmutter-Segment (10) an dem Grundblock (8) justierbar und fixierbar angeordnet ist,
- mindestens zwei in Axialrichtung verschiebbare Gleitfüße (14, 15) zwischen dem an dem Grundblock (8) angeordneten Gleitmutter-Segment (10) und dem weiteren Gleitmutter-Segment (12) senkrecht zur Axialrichtung angeordnet sind und
- einer Verstellvorrichtung (17) vorgesehen ist, mit der das federnd gehalterte Gleitmutter-Segment (12) gegenüber dem an dem Grundblock (8) angeordneten Gleitmutter-Segment (10) in Axialrichtung der Spindel (1) verschiebar ist,
wodurch in Abhängigkeit von der wählbaren Richtung der Linearbewegung eine Gewindeflanke des Gewindes des Gleitmutter-Segmentes (10) an der in Richtung der Linearbewegung schiebenden Gewindeflanke des Gewindes der Spindel (1) anliegt und eine der Gewindeflanken des Gewindes des weiteren Gleitmutter-Segmentes (12) mit einer definierten Kraft an die andere, nicht in Richtung der Linearbewegung schiebenden Gewindeflanke des Gewindes der Spindel (1) angedrückt wird.

2. Spindelantrieb nach Anspruch 1, **dadurch gekennzeichnet,** daß mindestens ein weiteres an dem Grundblock (8) angeordnetes Gleitmutter-Segment (11) vorgesehen ist.

3. Spindelantrieb nach Anspruch 1 oder 2, **dadurch gekennzeichnet,** daß die mit dem Grundblock (8) verbundenen Gleitmutter-Segmente (10, 11) oberhalb der Spindel (1) angeordnet sind.

4. Spindelantrieb nach einem der Ansprüche 1 bis 3, **dadurch gekennzeichnet,** daß das federnd gehalterte Gleitmutter-Segment (12) unterhalb der Spindel (1) angeordnet ist.

5. Spindelantrieb nach einem der Ansprüche 1 bis 4, **dadurch gekennzeichnet,** daß die Gleitmutter-Segmente (10, 11) mittels Schrauben (13) an dem Grundblock (8) fixierbar sind.

6. Spindelantrieb nach einem der Ansprüche 1 bis 5, **dadurch gekennzeichnet,** daß sich die Gleitmutter-Segmente (10, 11, 12) an der Mantelfläche der Spindel (1) abstützen.

7. Spindelantrieb nach einem der Ansprüche 1 bis 6, **dadurch gekennzeichnet,** daß das federnd gehalterte Gleitmutter-Segment (12) mittels Zugfedern (16) gegenüber den an dem Grundblock (8) angeordneten Gleitmutter-Segmenten (10, 11) vorgespannt ist.

8. Spindelantrieb nach Anspruch 7, **dadurch gekennzeichnet,** daß
- vier Zugfedern (16) vorgesehen sind, deren eine Enden paarweise jeweils an den beiden Stirnseiten des weiteren Gleitmutter-Segmentes (12) befestigt sind,
- die anderen Enden der an der dem Grundblock (8) zugewandten Stirnseite des Gleitmutter-Segmentes (12) befestigten zwei Zugfedern (16) an dem Grundblock (8) fixiert sind und
- die anderen Enden der an der dem Grundblock (8) abgewandten Stirnseite des Gleitmutter-Segmentes (12) befestigten zwei Zugfedern (16) an den Gleitmutter-Segmenten (10, 11) fixiert sind.

9. Spindelantrieb nach einem der Ansprüche 1 bis 8, **dadurch gekennzeichnet,** daß die Gewindeprofile der Gleitmutter-Segmente (10, 11, 12) und der Spindel (1) annähernd gleich sind.

10. Spindelantrieb nach einem der Ansprüche 1 bis 9, **dadurch gekennzeichnet,** daß die Gewindenuten von Gleitmutter-Segmenten (10, 11, 12) und Spindel (1) eine axiale Lose aufweisen.

11. Spindelantrieb nach einem der Ansprüche 1 bis 10, **dadurch gekennzeichnet,** daß die Verstellvorrichtung (17) aus folgenden Komponenten besteht:
- einer in dem Grundblock (8) gelagerten und axial verschiebbaren Schubstange (21),
- einem mit der Schubstange (21) verbundenen Schubelement (22) und
- zwei beidseitig des Schubelementes (22) angeordnete und die Schubstange (21) umschließende Druckfedern (23, 14), die sich an dem Schubelement (22) und dem weiteren Gleitmutter-Segment (12) abstützen und von denen jeweils eine in Abhängigkeit von der axialen Stellung des Schubelementes (22) eine axiale Schubkraft auf das weitere Gleitmutter-Segment (12) ausübt.

12. Spindelantrieb nach einem der Ansprüche 1 bis 11, **dadurch gekennzeichnet,** daß die Schubstange (21) der Verstellvorrichtung (17) mittels eines elektrisch gesteuerten Verstellorgans axial verschiebbar ist.

13. Spindelantrieb nach einem der Ansprüche 1 bis 12, **dadurch gekennzeichnet,** daß
- die Gleitfüße (14, 15) an der Außenfläche eines Abschlußdeckels (18) an gebracht sind, der an der dem Grundblock (8) zugewanden Stirnseite des weiteren Gleitmutter-Segmentes (12) befestigt ist und
- sich die Gleitfüße (14, 15) an dem Grundblock (8) abstützen.

14. Spindelantrieb nach Anspruch 13, **dadurch gekennzeichnet,** daß der Abschlußdeckel (18) justierbar an dem weiteren Gleitmutter-Segment (12) angebracht ist.

15. Spindelantrieb nach einem der Ansprüche 1 bis 14, **dadurch gekennzeichnet,** daß die Gleitmutter-Segmente (10, 11, 12) als Segmente eines Hohlzylinders ausgebildet sind, die sich in Axialrichtung der Spindel (1) erstrecken.

## Claims

1. A spindle drive with a spindle (1) and with a spindle nut (5) running on the spindle (1) for the high precision drive of a linearly movable device (7), in which the spindle nut (5) consists of the following members:
- a base block (8) connected with the movable device (7), with a bore (9) running axially to the spindle (1) for the loose passage of the spindle (1),
- a sliding nut segment (10) arranged on the base block (8), the thread of which rests against the spindle (1) and
- an elastically mounted further sliding nut segment (12), the thread of which rests elastically against the spindle (1), characterised in that
- the sliding nut segment (10) is arranged so as to be adjustable and able to be fixed on the base block (8),
- at least two sliding feet (14, 15), displaceable in axial direction, are arranged between the sliding nut segment (10) arranged on the base block (8) and the further sliding nut segment (12) perpendicularly to the axial direction and
- an adjusting device (17) is provided, by which the elastically mounted sliding nut segment (12) is displaceable with respect to the sliding nut segment (10), arranged on the base block (8), in axial direction of the spindle (1), whereby as a function of the selectable direction of the linear movement, a thread flank of the thread of the sliding nut segment (10) lies against the thread flank of the thread of the spindle (1), sliding in the direction of the linear movement, and one of the thread flanks of the thread of the further sliding nut segment (12) is pressed with a defined force against the other thread flank of the thread of the spindle (1) not sliding in the direction of the linear movement.

2. The spindle drive according to Claim 1, characterised in that at least one further sliding nut segment (11) is provided, arranged on the base block (8).

3. The spindle drive according to Claim 1 or 2, characterised in that the sliding nut segments (10, 11) connected with the base block (8) are arranged above the spindle (1).

4. The spindle drive according to one of Claims 1 to 3, characterised in that the elastically mounted sliding nut segment (12) is arranged beneath the spindle (1).

5. The spindle drive according to one of Claims 1 to 4, characterised in that the sliding nut segments (10, 11) are able to be fixed to the base block (8) by means of screws (13).

6. The spindle drive according to one of Claims 1 to 5, characterised in that the sliding nut segments (10, 11, 12) rest against the covering surface of the spindle (1).

7. The spindle drive according to one of Claims 1 to 6, characterised in that the elastically mounted sliding nut segment (12) is prestressed by means of tension springs (16) with respect to the sliding nut segments (10, 11) arranged on the base block (8).

8. The spindle drive according to Claim 7, characterised in that
- four tension springs (16) are provided, the one ends of which are fastened in pairs respectively to the two end faces of the further sliding nut segment (12),
- the other ends of the two tension springs (16) fastened to the end face of the sliding nut segment (12) facing the base block (8) are fixed to the base block (8) and
- the other ends of the two tension springs (16) fastened to the end face of the sliding nut segment (12) facing away from the base block (8) are fixed to the sliding nut segments (10, 11).

9. The spindle drive according to one of Claims 1 to 8, characterised in that the thread profiles of the sliding nut segments (10, 11, 12) and of the spindle (1) are approximately identical.

10. The spindle drive according to one of Claims 1 to 9, characterised in that the thread grooves of the sliding nut segments (10, 11, 12) and spindle (1) have an axial clearance.

11. The spindle drive according to one of Claims 1 to 10, characterised in that the adjustment device (17) consists of the following components:
- a push rod (21) mounted and axially displaceable in the base block (8),
- a push member (22) connected with the push rod (21) and
- two compression springs (23, 14) arranged on both sides of the push member (22) and surrounding the push rod (21), which springs (23, 14) rest against the push member (22) and the further sliding nut segment (12) and one of which respectively exerts an axial pushing force onto the further sliding nut segment as a function of the axial position of the push member (22).

12. The spindle drive according to one of Claims I to 11, characterised in that the push rod (21) of the adjustment device (17) is axially displaceable by means of an electrically controlled adjustment member.

13. The spindle drive according to one of Claims 1 to 12, characterised in that
- the sliding feet (14, 15) are brought against the outer surface of a closure cover (18) which is fastened to the end face of the further sliding nut segment (12) facing the base block (8) and
- the sliding feet (14, 15) rest against the base block (8).

14. The spindle drive according to Claim 13, characterised in that the closure cover (18) is arranged so as to be adjustable on the further sliding nut segment (12).

15. The spindle drive according to one of Claims 1 to 14, characterised in that the sliding nut segments (10, 11, 12) are constructed as segments of a hollow cylinder which extend in axial direction of the spindle (1).

## Revendications

1. Entraînement à broche comprenant une broche (1) et un écrou (5) engagé sur la broche (1) pour assurer un entraînement très précis d'un dispositif (7) mobile linéairement, selon lequel l'écrou à broche (5) se compose des éléments suivants :
- un bloc de base (8) relié au dispositif mobile (7), avec un perçage (9) axial par rapport à la broche (1) pour le passage libre de la broche (1),
- un segment d'écrou-coulisseau (10) prévu sur le bloc de base (8) et dont le filetage s'appuie sur la broche (1) et,
- d'autres segments d'écrou-coulisseau (12) tenus élastiquement dont le filetage s'appuie de manière élastique contre la broche (1),
caractérisé en ce que
- le segment de l'écrou-coulisseau (10) est monté sur le bloc de base (8) de manière à pouvoir se régler et se bloquer,
- au moins deux patins de glissement (14) coulissant axialement sont prévus entre le segment d'écrou-coulisseau (10) du bloc de base (8) et l'autre segment d'écrou-coulisseau (12), perpendiculairement à la direction axiale, et
- un dispositif de réglage (17) est prévu pour coulisser le segment d'écrou-coulisseau (12) tenu élastiquement par rapport au segment d'écrou-coulisseau (10) porté par le bloc de base (8), dans la direction axiale de la broche (1),
- pour qu'en fonction de la direction choisie du mouvement linéaire, un flanc du filetage du segment de l'écrou-coulisseau (10) s'applique contre le flanc avant du filetage de la broche (1) dans le sens du mouvement linéaire et presse l'un des flancs du filetage de l'autre segment d'écrou-coulisseau (12) avec une force définie dont l'autre flanc du filetage de la broche (1) qui n'est pas dans la direction du mouvement linéaire.

2. Entraînement à broche selon la revendication 1,
caractérisé par
au moins un autre segment d'écrou-coulisseau (11) prévu sur le bloc de base (8).

3. Entraînement à broche selon la revendication 1 ou 2,
caractérisé en ce que
les segments d'écrou-coulisseau (10, 11) reliés au bloc de base (8) se trouvent au-dessus de la broche (1).

4. Entraînement à broche selon l'une des revendications 1 à 3,
caractérisé en ce que
le segment d'écrou-coulisseau (12) tenu élastiquement se trouve sous la broche (1).

5. Entraînement à broche selon l'une des revendications 1 à 4,
caractérisé en ce que
les segments d'écrou-coulisseau (10, 11) se bloquent avec des vis (13) sur le bloc de base (8).

6. Entraînement à broche selon l'une des revendications 1 à 5,
caractérisé en ce que
les segments d'écrou-coulisseau (10, 11, 12) s'appuient contre la surface enveloppe de la broche (1).

7. Entraînement à broche selon l'une des revendications 1 à 6,
caractérisé en ce que
le segment d'écrou-coulisseau (12) tenu élastiquement est précontraint par des ressorts de traction (16) contre les segments d'écrou-coulisseau (10, 11) prévus sur le bloc de base (8).

8. Entraînement à broche selon la revendication 7,
caractérisé par
quatre ressorts de traction (16) dont une extrémité est fixée par paire chaque fois aux deux faces frontales de l'autre segment d'écrou-coulisseau (12),
- les autres extrémités des deux ressorts de traction (16) fixées à la face frontale du segment d'écrou-coulisseau (12) tournée vers le bloc de base (8) sont fixées sur le bloc de base (8) et,
- les autres extrémités des seconds ressorts de traction (16) fixées sur la face frontale du segment d'écrou-coulisseau (12) non tournée vers le bloc de base (8) sont bloquées sur les segments d'écrou-coulisseau (10, 11).

9. Entraînement à broche selon l'une des revendications 1 à 8,
caractérisé en ce que
les profils de filetage des segments d'écrou lisse (10, 11, 12) et de la broche (1) sont sensiblement les mêmes.

10. Entraînement à broche selon l'une des revendications 1 à 9,
caractérisé en ce que
les gorges de filetage des segments d'écrou-coulisseau (10, 11, 12) et de la broche (1) ont une jeu axial.

11. Entraînement à broche selon l'une des revendications 1 à 10,
caractérisé en ce que
le dispositif de réglage (17) comprend les éléments suivants :
- une barre de poussée (21) montée dans le bloc de base (8) et coulissant axialement,
- un élément de poussée (22) relié à la barre de poussée (21) et,
- deux ressorts de compression (23, 14) prévus des deux côtés de l'élément de poussée (22) et entourant la barre de poussée (21), ces ressorts s'appuyant contre l'élément de poussée (22) et l'autre segment d'écrou-coulisseau (12) et chacun de ces ressorts exerce une force de poussée axiale sur l'autre segment d'écrou lisse (12) en fonction de la position axiale de l'élément de poussée (22).

12. Entraînement à broche selon l'une des revendications 1 à 11,
caractérisé en ce que
la barre de poussée (21) du dispositif de réglage (17) est coulissant axialement à l'aide d'un organe de réglage à commande électrique.

13. Entraînement à broche selon l'une des revendications 1 à 12,
caractérisé en ce que
- les patins de glissement (14, 15) sont prévus sur la surface extérieure d'un couvercle (18) fixé à la face frontale de l'autre segment d'écrou lisse (12) tournée vers le bloc de base (8) et,
- les patins de glissement (14, 15) s'appuient contre le bloc de base (8).

14. Entraînement à broche selon la revendication 13,
caractérisé en ce que
le couvercle (18) est monté de manière réglable sur l'autre segment d'écrou-coulisseau (12).

15. Entraînement à broche selon l'une des revendications 1 à 14,
caractérisé en ce que
les segments d'écrou-coulisseau (10, 11, 12) sont en forme de segments d'un cylindre creux s'étendant dans la direction axiale de la broche (1).
